# EUROPÄISCHE PATENTSCHRIFT

(11) **EP 3 487 124 B1**
(45) Veröffentlichungstag und Bekanntmachung des Hinweises auf die Patenterteilung: **20.05.2020**
(21) Anmeldenummer: 17202366.5
(22) Anmeldetag: 17.11.2017
(51) Int. Cl.: H04L 12/40, H04L 12/28, H04L 12/66, H04L 29/06, H04L 29/08

(54) **SYSTEME UND VERFAHREN ZUM AUFBAU VON VERBINDUNGEN ZWISCHEN EINEM MOBILGERÄT UND EINEM LOKALEN NETZWERK**
SYSTEMS AND METHOD FOR ESTABLISHING CONNECTIONS BETWEEN A MOBILE DEVICE AND A LOCAL NETWORK
SYSTÈMES ET PROCÉDÉ D'ÉTABLISSEMENT DE CONNEXIONS ENTRE UN DISPOSITIF MOBILE ET UN RÉSEAU LOCAL

(43) Veröffentlichungstag der Anmeldung: 22.05.2019
(73) Patentinhaber: ise Individuelle Software und Elektronik GmbH, 26122 Oldenburg (DE)
(72) Erfinder: KESSLER, Jan, 26129 Oldenburg (DE)
(74) Vertreter: Angerhausen, Christoph

(56) Entgegenhaltungen:
- EP-A1- 2 852 103
- EP-A1- 3 107 219
- US-A1- 2009 316 628
- LV YONG ET AL: "Fieldbus interoperation technologies", INTELLIGENT CONTROL AND AUTOMATION, 2004. WCICA 2004. FIFTH WORLD CONG RESS ON HANGZHOU, CHINA 15-19 JUNE 2004, PISCATAWAY, NJ, USA,IEEE, US, Bd. 4, 15. Juni 2004 (2004-06-15), Seiten 3620-3623, XP010730916, DOI: 10.1109/WCICA.2004.1343198 ISBN: 978-0-7803-8273-2

## Beschreibung

### GEBIET

Die vorliegende Patentanmeldung bezieht sich auf Systeme und Verfahren zum Aufbau von Verbindungen zwischen einem Mobilgerät und einem lokalen Netzwerk, insbesondere zwischen einem Mobilgerät und einem Netzwerk, dessen Knoten Funktionen in einem Gebäude erfüllen.

### HINTERGRUND

In Gebäuden werden zunehmend ortsgebundene Netzwerke eingesetzt, deren Knoten eine feste Position haben und Funktionen zur Steuerung bestimmter Gebäudeparameter übernehmen. Beispielsweise sind Netzwerke bekannt, deren Knoten die Regelung eines Heizkörpers oder einer Jalousie übernehmen. Diese Knoten können entweder durch unmittelbare Bedienelemente am Gerät oder von einem anderen Ort innerhalb des Netzwerks gesteuert werden. Beispielsweise kann sich ein Benutzer über Bedienelemente eines ersten Knotens Zugriff auf einen zweiten Knoten verschaffen und durch Bedienung des ersten Knotens Funktionen des zweiten Knotens steuern. Hierzu können an einzelnen Knoten Benutzeroberflächen bereitgestellt werden.

Zur Kommunikation der Knoten untereinander wurden Protokolle entwickelt, die den besonderen Anforderungen in der Gebäudetechnik Rechnung tragen und mit dem Ziel einer Standardisierung entwickelt wurden. Ein Beispiel für ein solches Protokoll ist KNX. Derartige Protokolle sind auf die technischen Gegebenheiten und Anforderungen in Gebäuden abgestimmt und daher nicht unmittelbar kompatibel zu Protokollen in anderen Netzwerken, beispielsweise mobilen Netzwerken. Aus EP 2 852 103 A1 sind Netzwerkknoten bekannt, die miteinander kommunizieren wobei wenigstens ein Netzwerkknoten eingerichtet ist, mit einem Gerät eine Drahtlosverbindung über ein Netzwerkprotokoll aufzubauen, das sich von einem Netzwerkprotokoll, das die Netzwerkknoten untereinander verwenden, unterscheidet.

In US 2009/316628 A1 ist ein Netzwerk offenbart, das zur Kommunikation mit einem zweiten Netzwerk eingerichtet ist, wobei ein Controller als Schnittstelle zwischen beiden Netzwerken dient.

In EP 3 107 219 A1 ist ein Uplink-Knoten offenbart, der eine Routingeinheit zum Weiterleiten von Datenpaketen eines datenerzeugenden Geräts an eine erste oder zweite Schnittstelle enthält. Verschiedene Funktechnologien werden verwendet. Der Uplink-Knoten kann mit einem primären Netzwerk verbunden sein, das wiederum mit einem Backbone-Netzwerk in Verbindung steht. Zur Bestimmung eines Uplink-Knotens wird ein Qualitätswert einer Verbindung zu dem primären Netzwerk herangezogen.

Bekannt ist ferner eine Steuerung solcher Funktionen mittels eines Mobilgeräts, etwa eines Smartphones. Mittels einer App auf einem Mobilgerät kann Kontakt zu einem Server oder Gateway als zentralem Zugangspunkt zu dem Netzwerk aufgenommen werden. Der Benutzer kann mittels der App Befehle eingeben, die an den Server oder das Gateway und von dort an einen entsprechenden Netzwerkknoten gesendet werden. Fällt der Server oder das Gateway aus oder ist aufgrund von Empfangsproblemen nicht erreichbar, kann auf Funktionen des Netzwerks nur noch unmittelbar über einen der Netzwerkknoten, nicht aber mittels des Mobilfunkgerätes, zugegriffen werden.

### ZUSAMMENFASSUNG

Der hier offenbarten Erfindung liegt die Aufgabe zugrunde, Verbindungen zwischen einem Mobilgerät und einem bestimmten Knoten in einem Netzwerk aufzubauen, ohne auf einen dedizierten Server angewiesen zu sein.

Ausführungsformen der Erfindung umfassen Systeme, umfassend: Einen oder mehrere Netzwerkknoten, die über ein erstes Netzwerkprotokoll miteinander kommunizieren, wobei wenigstens ein Netzwerkknoten eingerichtet ist, mit einem mobilen Endgerät eine Drahtlosverbindung über ein zweites Netzwerkprotokoll aufzubauen, wobei der Netzwerkknoten eine Übertragungskomponente aufweist, die eingerichtet ist, eine Verbindung zwischen dem mobilen Endgerät und einem Zielknoten der Netzwerkknoten aufzubauen, wobei das zweite Netzwerkprotokoll von der Übertragungskomponente in das erste Netzwerkprotokoll übersetzt wird, wobei das mobile Endgerät eingerichtet ist, unter den mittels Funk erreichbaren Netzwerkknoten denjenigen mit der besten Verbindungsqualität zu dem mobilen Endgerät auszuwählen, dadurch gekennzeichnet, dass der Zielknoten anhand einer Benutzereingabe in das mobile Endgerät bestimmt wird.

Beispielsweise ist die Verbindung eine Punkt-zu-Punkt-Verbindung zwischen dem mobile Endgerät und dem Zielknoten.

Gemäß bestimmten Ausführungsformen ist das mobile Endgerät mit mehreren der Netzwerkknoten gleichzeitig verbunden.

Vorteilhafterweise ist das erste Netzwerkprotokoll das KNX-Protokoll und/oder ist das zweite Netzwerkprotokoll das Bluetooth-Protokoll.

Insbesondere kann der Verbindungsaufbau von dem mobilen Endgeräts zu dem Zielknoten durch das mobile Endgerät initiiert werden.

In bestimmten Ausführungsformen wird Daten, die von dem mobilen Endgerät an dem Netzwerkknoten empfangen werden, durch die Übertragungskomponente ein Servicecode hinzugefügt.

Insbesondere sind derartige Systeme dadurch gekennzeichnet, dass die Verbindung zwischen dem mobilen Endgerät und dem Zielknoten über mehrere Netzwerkknoten verläuft und jeder dieser Netzwerkknoten den übertragenen Daten einen Servicecode hinzugefügt oder einen vorhandenen Servicecode modifiziert.

Weitere erfindungsgemäße Ausführungsformen umfassen Systeme, umfassend: Einen oder mehrere Netzwerkknoten, die über ein erstes Netzwerkprotokoll miteinander kommunizieren, wobei wenigstens ein Netzwerkknoten eingerichtet ist, mit einem mobilen Endgerät eine Drahtlosverbindung über ein zweites Netzwerkprotokoll aufzubauen, wobei der Netzwerkknoten eine Übertragungskomponente aufweist, die eingerichtet ist, eine Verbindung zwischen einem Zielknoten der Netzwerkknoten und dem mobilen Endgerät aufzubauen, wobei das erste Netzwerkprotokoll von der Übertragungskomponente in das zweite Netzwerkprotokoll übersetzt wird, wobei das mobile Endgerät eingerichtet ist, unter den mittels Funk erreichbaren Netzwerkknoten denjenigen mit der besten Verbindungsqualität zu dem mobilen Endgerät auszuwählen, dadurch gekennzeichnet, dass der ausgewählte Netzwerkknoten eingerichtet ist, den Zielknoten anhand einer Benutzereingabe in das mobile Endgerät zu bestimmen.

Ferner kann Daten, die von dem Netzwerkknoten an das mobile Endgerät gesendet werden, durch die Übertragungskomponente ein Servicecode hinzugefügt werden.

Solche Systeme können dadurch gekennzeichnet sein, dass die Verbindung zwischen dem Netzwerkknoten und dem mobilen Endgerät über mehrere Netzwerkknoten verläuft und jeder dieser Netzwerkknoten den übertragenen Daten einen Servicecode hinzufügt oder einen vorhandenen Servicecode modifiziert.

Außerdem umfassen erfindungsgemäße Ausführungsformen ein Verfahren, umfassend: Aufbauen einer Verbindung zwischen einem mobilen Endgerät und einem von mehreren Netzwerkknoten, die über ein erstes Protokoll miteinander kommunizieren, über ein zweites Protokoll, wobei das mobile Endgerät unter den mittels Funk erreichbaren Netzwerkknoten denjenigen mit der besten Verbindungsqualität auswählt; Übersetzen von Daten, die an dem Netzwerkknoten von dem mobilen Endgerät empfangen werden, aus dem zweiten Protokoll in das erste Protokoll und Weiterleiten der Daten an einen in den Daten angegebenen Zielknoten in dem Netzwerk, dadurch gekennzeichnet, dass der Zielknoten anhand einer Benutzereingabe in das mobile Endgerät bestimmt wird.

Desgleichen umfassen Ausführungsformen ein Verfahren, umfassend: Aufbauen einer Verbindung zwischen einem mobilen Endgerät und einem von mehreren Netzwerkknoten, die über ein erstes Protokoll miteinander kommunizieren, über ein zweites Protokoll, wobei das mobile Endgerät unter den mittels Funk erreichbaren Netzwerkknoten denjenigen mit der besten Verbindungsqualität auswählt; Übersetzen von Daten, die an dem Netzwerkknoten von einem anderen Netzwerkknoten über des erste Netzwerkprotokoll empfangen werden, aus dem zweiten Protokoll in das erste Protokoll und Weiterleiten der Daten an das mobile Endgerät, dadurch gekennzeichnet, dass der Zielknoten anhand einer Benutzereingabe in das mobile Endgerät bestimmt wird.

### KURZE BESCHREIBUNG DER ZEICHNUNGEN

Figur 1 zeigt ein System gemäß Ausführungsformen der Erfindung.
Figur 2 zeigt ein erfindungsgemäßes Verfahren.
Figur 3 zeigt ein weiteres erfindungsgemäßes Verfahren.

### AUSFÜHRLICHE BESCHREIBUNG

Mobilgeräte, wie etwa Smartphones, verfügen üblicherweise über eine oder mehrere Antennen, über die eine Verbindung zu einer nächstliegenden Sendestation (base station) aufgebaut werden kann. Zusätzlich verfügen viele derartige Geräte über eine Funkschnittstelle, über die eine Verbindung zu einem entsprechend ausgerüsteten Gerät aufgebaut werden kann. Ein Beispiel für ein Protokoll, mit dem über eine solche Funkverbindung kommuniziert werden kann, ist das Bluetooth-Protokoll.

Eine Ausführungsform der Erfindung umfasst ein System, das aus einem Mobilgerät und einem Netzwerk aus Netzwerkknoten besteht. Das Mobilgerät sowie ein oder mehrere der Netzwerkknoten verfügen über eine Funkschnittstelle. Befindet sich das Mobilgerät in Reichweite eines oder mehrerer dieser Netzwerkknoten, baut es automatisch zu einem dieser Netzwerkknoten eine Funkverbindung auf. Alternativ kann dieser Verbindungsaufbau auf Veranlassung eines Benutzers des Mobilgeräts erfolgen, beispielsweise mittels Ausführen und Bedienen einer App auf dem Mobilgerät. Das Mobilgerät ist eingerichtet, unter den mittels Funk erreichbaren Netzwerkknoten denjenigen auszuwählen, der die zuverlässigste Funkverbindung ermöglicht. Dies kann beispielsweise durch Auswerten der Empfangsqualität mehrerer Funksignale der Netzwerkknoten erfolgen. Diese Auswertung und ein anschließender Verbindungsaufbau erfolgt lediglich dann, wenn ein Mindestschwellwert für die Empfangsqualität überschritten wurde. Ein für einen Verbindungsaufbau ausgewählter Netzwerkknoten kann von dem Mobilgerät weiter entfernt sein als ein anderer, nicht ausgewählter Netzwerkknoten, wenn der ausgewählte Netzwerkknoten bessere Empfangsqualität bietet. Dies kann beispielsweise dann der Fall sein, wenn ein Netzwerkknoten zwar in der Nähe des Mobilgeräts liegt, jedoch durch eine Wand von diesem getrennt ist.

In einer Ausführungsform geht die Auswahl eines Netzwerkknotens und der Verbindungsaufbau zu diesem Netzwerkknoten auf eine Veranlassung des Benutzers zurück. Wie beschrieben, beruht diese Veranlassung auf Bedienung einer App. Eine solche App kann eingerichtet sein, dem Benutzer Zugriff auf einen bestimmten Netzwerkknoten zu liefern. Beispielsweise kann die App eine Übersicht vorhandener Netzwerkknoten anzeigen, einschließlich solcher, die nicht über eine Funkverbindung erreichbar sind. Auch kann die App Funktionen anzeigen, die mittels dieser Netzwerkknoten aufgerufen werden können. Wählt der Benutzer mittels der App einen dieser Netzwerkknoten beziehungsweise eine dieser Funktionen aus, initiiert das Mobilgerät eine Punkt-zu-Punkt-Verbindung mit dem ausgewählten Netzwerkknoten beziehungsweise dem Netzwerkknoten, der die ausgewählte Funktion bereitstellt. Wie bereits erläutert, baut das Mobilgerät hierzu eine Funkverbindung zu demjenigen Netzwerkknoten auf, der die beste Verbindungsqualität bietet, und nicht unbedingt zu dem ausgewählten Netzwerknoten. Der ausgewählte Netzwerkknoten wird im Folgenden auch als Zielknoten bezeichnet. Handelt es sich bei dem über Funk mit dem Mobilgerät verbundenen Netzwerkknoten um den Zielknoten, so wird die gewählte Funktion auf dem Zielknoten aufgerufen.

Handelt es sich bei dem Netzwerkknoten nicht um den Zielknoten, so wird erfindungsgemäß wie folgt verfahren. Derjenige Netzwerkknoten, mit dem das Mobilgerät nunmehr über Funkverbindung verbunden ist, verfügt über eine Übertragungskomponente. Eine solche Übertragungskomponente kann auch in anderen oder sogar in sämtlichen Netzwerkknoten enthalten sein. Die Übertragungskomponente ist wahlweise eine Software- und/oder Hardwarekomponente, und ist eingerichtet, Datenpakete des Mobilgeräts zu empfangen und zu verarbeiten. Die empfangenen Datenpakete liegen in dem Protokoll vor, das für die Funkverbindung verwendet wird, beispielsweise Bluetooth. Die Übertragungskomponente ist ferner eingerichtet, den Zielknoten, an den die Datenpakete adressiert sind, zu identifizieren. In bestimmten Ausführungsformen kann die Übertragungskomponente auch eine Route zu dem Zielknoten bestimmen und entscheiden, auf welchem Weg die Datenpakete an den Zielknoten weitergeleitet werden. Jedoch sind Routingmechanismen bekannt, die hierzu eingesetzt werden können, und müssen nicht unbedingt durch die Übertragungskomponente implementiert werden.

Die Übertragungskomponente ist insbesondere eingerichtet, die von dem Mobilgerät empfangenen Datenpakete aus dem Protokoll der Funkverbindung, hier auch als Drahtlosprotokoll bezeichnet, in ein Protokoll der Netzwerkknoten zu übersetzen. Häufig sind die Netzwerkknoten miteinander nicht über Funk, sondern über ein drahtgebundenes Protokoll verbunden, beispielsweise KNX. Alternativ können Netzwerkknoten ebenfalls über drahtlose Protokolle miteinander kommunizieren. Insbesondere können diese mit dem Protokoll der Funkverbindung des Mobilgerätes identisch sein. Im Folgenden werden die Protokolle der Netzwerkknoten zusammenfassend als Zielprotokoll bezeichnet. Das Übersetzen aus dem Drahtlosprotokoll des Mobilgerätes in das Protokoll des oder der Netzwerkknoten kann in einer Ausführungsform durch Ersetzen von Paketheadern des zu übersetzenden Protokolls durch entsprechende Paketheader des Zielprotokolls erfolgen. Beispielsweise kann die Übertragungskomponente über eine Abbildungstabelle verfügen, die die Datenheader beider Protokolle aufeinander abbildet, und den jeweiligen Paketheader nachschlagen. Alternativ kann auf konventionelle Übersetzungseinrichtungen oder -programme zurückgegriffen werden.

Die Übertragungskomponente leitet die Datenpakete in übersetzter Form an den Zielknoten beziehungsweise an einen erreichbaren Netzwerkknoten weiter, mit der Maßgabe, die Datenpakete weiterzuleiten.

In bestimmten Ausführungsformen können anstelle einer Punkt-zu-Punkt-Verbindung auch Broadcast- oder Multicast-Verbindungen aufgebaut werden. Beispielsweise kann die App Funktionalität zum Abschalten sämtlicher Funktionen im Netzwerk bereitstellen. Bei Auswahl einer solchen Funktion wird eine Verbindung zu sämtlichen betroffenen Netzwerkknoten aufgebaut, wobei die Datenpakete wie beschrieben über Drahtlosprotokoll einen über Drahtlosprotokoll mit dem Mobilgerät verbundenen Netzwerkknoten erreichen, wo sie mittels Übertragungskomponente in ein drahtgebundenes Protokoll übersetzt und an Zielknoten weitergeleitet werden.

Bestimmte Funktionen der Netzwerkknoten, die durch den Benutzer aufgerufen werden, können eine weitere Interaktion mit dem Benutzer erfordern. Als Antwort auf Befehle oder Anweisungen in Datenpaketen, die an einem Zielknoten empfangen werden, kann dieser Zielknoten seinerseits Datenpakete senden. Diese werden zunächst an weitere Netzwerkknoten übermittelt. In einer Ausführungsform werden die Datenpakete an denjenigen Netzwerkknoten übermittelt, der mit dem Mobilgerät verbunden war oder ist. Jedoch kann gemäß einer Ausführungsform neu ermittelt werden, ob und mit welchem Netzwerkknoten das Mobilgerät verbunden ist. Dies ist vorteilhaft in Situationen, in denen sich der Benutzer durch das Gebäude bewegt und das Mobilgerät infolgedessen fortwährend Funkverbindungen zum jeweils nächstgelegenen oder besser erreichbaren Netzwerkknoten aufbaut und schwächer werdende Funkverbindungen unterbricht. Zu diesem Zweck kann der Zielknoten eingerichtet sein, seine Antwort in Datenpaketen zu versenden, die an sämtliche oder jedenfalls sämtliche mit Funkschnittstelle ausgerüsteten Netzwerkknoten adressiert sind, beispielsweise in Form einer Broadcast- oder Multicastsendung. Übertragungskomponenten in diesen Netzwerkknoten können eingerichtet sein, als Antwort auf Empfangen solcher Datenpakete zu prüfen, ob das adressierte Mobilgerät über Funk mit ihnen verbunden ist. In diesem Fall übersetzt die jeweilige Übertragungskomponente die Datenpakete aus dem zwischen den Netzwerkknoten verwendeten Protokoll in das Drahtlosprotokoll und überträgt die Datenpakete über die Funkverbindung an das Mobilgerät.

Zur Adressierung des Mobilgeräts kann beispielsweise eine Netzwerkadresse, beispielweise eine lokale IP, verwendet werden, die dem Mobilgerät im Zuge des Funkverbindungsaufbaus zugewiesen wurde. Alternativ kann ein eindeutiger Bezeichner zugewiesen werden, der von einer Übertragungskomponente beim Funkverbindungsaufbau bestimmt und dem Mobilgerät zugewiesen wird. Bei erneutem Aufbau einer Funkverbindung eines Mobilgeräts mit einem anderen Netzwerkknoten wird dem Mobilgerät in derartigen Ausführungsformen der gleiche Bezeichner zugewiesen, beispielsweise aufgrund einer Hardware-Adresse, beispielsweise MAC-Adresse, des Mobilgeräts.

Schließlich erreicht die Antwort des Zielknotens das Mobilgerät und wird dem Benutzer durch die App angezeigt, etwa in Form einer Statusanzeige der Funktionalität oder der Konfiguration des Zielknotens.

In bestimmten Ausführungsformen kann eine Kommunikation zwischen Netzwerkknoten und Mobilgerät von vornherein von einem Netzwerkknoten ausgehen. Beispielsweise können bestimmte Netzwerkknoten eingerichtet sein, in Intervallen oder zu festgelegten Zeitpunkten oder infolge des Erreichens vorbestimmter Messwerte eine Nachricht zu senden, die an das Mobilgerät eines Benutzers ausgeliefert werden soll, ohne dass eine Anforderung durch das Mobilgerät vorliegt. Beispielsweise kann ein Netzwerkknoten durch einen Administrator konfiguriert sein, Nachrichten an ein Mobiltelefon zu senden, dem ein bestimmter Bezeichner zugewiesen ist. Hierzu kann eine Broadcast- oder Multicastnachricht versendet werden, wobei die bereits erläuterten Mechanismen zum Erreichen des Mobilgeräts verwendet werden. Somit kann das Mobilgerät trotz fortwährend wechselnder Funkverbindungen in konstanten Kontakt mit dem Netzwerk stehen und Datenpakete von direkt oder indirekt verbundenen Netzwerkknoten erhalten sowie in den Datenpaketen erhaltene Nachrichten anzeigen. Wie bereits dargestellt, findet eine Übersetzung aus dem ersten in ein zweites Protokoll durch die Übertragungskomponente statt, die sich in demjenigen Netzwerkknoten befindet, mit dem das Mobilgerät über Funk verbunden ist. Zusätzlich kann auch im Rahmen einer Datenübertragung zwischen Netzwerkknoten übersetzt werden, beispielsweise wenn Daten an einem ersten Netzwerkknoten drahtgebunden eintreffen und an einen zweiten Netzwerkknoten übertragen werden, der drahtlos mit dem ersten Netzwerkknoten verbunden ist.

In bestimmten Ausführungsformen enthalten Datenpakete, die zwischen den Netzwerkknoten transportiert werden, Servicecodes. Diese Servicecodes können bestimmte Eigenschaften der Datenpakete anzeigen, beispielsweise die Art der Kommunikation, und können einem Datenpaket jeweils durch Übertragungskomponenten hinzugefügt werden. Ferner können die Übertragungskomponenten existierende Servicecodes in einem Datenpaket modifizieren, beispielsweise um sie zu aktualisieren. In bestimmten Ausführungsformen enthalten die Servicecodes Angaben darüber, ob ein Datenpaket an einen Netzwerkknoten oder ein Mobilgerät ausgeliefert werden soll. Die Übertragungskomponente ist in einer Ausführungsform eingerichtet, anhand der Servicecodes zu bestimmen, ob eine Übersetzung in ein anderes Protokoll erforderlich ist, und führt in diesem Fall die Übersetzung durch. Auf diese Weise unterscheidet die Erfindung zwischen Datenpaketen, die lediglich innerhalb des Netzwerks transportiert werden, und solchen, die über Drahtlosprotokoll an ein Mobilgerät ausgeliefert werden. In bestimmten Ausführungsformen wird eine solche Servicecode-basierte Entscheidung durch eine Übertragungskomponente genau dann durchgeführt, wenn der Netzwerkknoten, dem diese Übertragungskomponente zugeordnet ist, mit dem betreffenden Mobilgerät verbunden ist.

Anstelle einer Übersetzung von Protokollen können bestimmte Ausführungsformen ein Tunneling vorsehen. Hierzu wird ein erstes Protokoll, beispielsweise ein Drahtlosprotokoll, in Form eines Tunnels innerhalb des Netzwerks über ein zweites Protokoll, beispielsweise eine drahtgebundenes Protokoll, geführt. Umgekehrt kann eine Übertragung des drahtgebundenen Protokolls in Form eines Tunnels über das Drahtlosprotokoll geführt werden. Beispielsweise wird BT über KNX beziehungsweise KNX über BT getunnelt.

Ausführungsformen der Erfindung umfassen ferner Verfahren zum Aufbauen von Verbindungen zwischen einem Netzwerk und einem Mobilgerät. Das Verfahren folgt den bereits beschriebenen Mechanismen zum Aufbau von Verbindungen, einschließlich Aufbauen einer Verbindung durch ein Mobilgerät mit einem Zielknoten innerhalb eines drahtgebundenen Netzwerks, wobei die Verbindung über einen Netzwerkknoten mit der besten Empfangsqualität erzeugt wird, und einschließlich Aufbauen einer Verbindung durch einen Netzwerkknoten zu einem Mobilgerät, das über Funk mit dem gleichen oder auch einem anderen Netzwerkknoten im gleichen Netzwerk verbunden ist.

Ausführungsformen umfassen auch computerlesbare Medien mit darauf gespeicherten Anweisungen, die, wenn sie durch einen Prozessor ausgeführt werden, eines der vorstehend beschriebenen Verfahren durchführen.

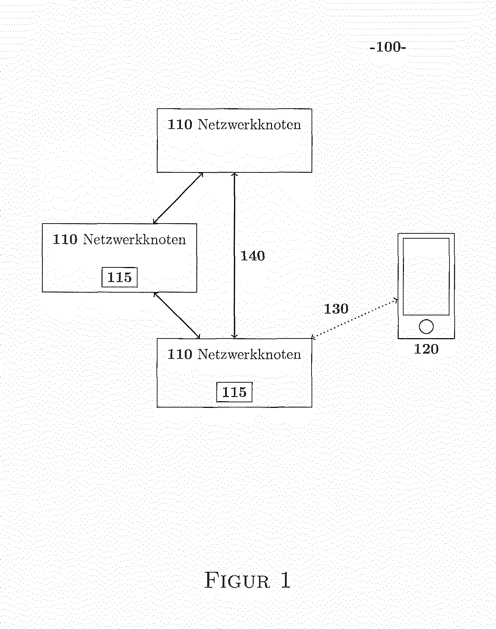

Figur 1 zeigt ein erfindungsgemäßes System 100 mit drei Netzwerkknoten 110, von denen zwei jeweils eine Übertragungskomponente 115 enthalten. Die Zahl der Netzwerkknoten ist beliebig, ebenso der Anteil der Netzwerkknoten, die über eine Übertragungskomponente verfügen. So können zum Beispiel sämtliche Netzwerkknoten über eine solche Komponente verfügen. Die Übertragungskomponenten weisen Funktionalität auf, um über ein Drahtlosprotokoll mit einem Mobilgerät 120 in Verbindung zu treten. Ferner stehen die Netzwerkknoten über ein drahtgebundenes oder drahtloses Protokoll miteinander in Verbindung. Beispielhaft gezeigt sind eine drahtgebundene Verbindung 140 und eine drahtlose Verbindung 130.

Das Mobilgerät 120 ist eingerichtet, eine Verbindung zu einem der Netzwerkknoten aufzubauen, wenn eine Mindestempfangsqualität erreicht wurde. Wird diese Bedingung durch mehrere Netzwerkknoten erfüllt, wählt das Mobilgerät 120 denjenigen Netzwerkknoten, der die beste Verbindungsqualität bietet. Die Verbindung kann entweder automatisch als Reaktion auf entsprechende erkannte Netzwerkknoten aufgebaut werden, oder auch auf Anweisungen durch einen Benutzer des Mobilgeräts 120, beispielsweise durch Verwendung einer App, die auf dem Mobilgerät ausgeführt wird.

Der Verbindungsaufbau erfolgt zwischen dem Mobilgerät 120 und einer Übertragungskomponente 115, die auf dem entsprechenden Netzwerkknoten installiert ist, und verwendet ein drahtloses Protokoll.

Die Übertragungskomponente 115 empfängt Datenpakete von dem Mobilgerät 120 und entscheidet anhand einer Adressierung der Datenpakete über die weitere Verwendung. Ist der Netzwerkknoten dieser Übertragungskomponente 115 identisch mit einem adressierten Zielknoten der Datenpakete, so werden die Datenpakete unmittelbar an eine Anwendung auf dem Netzwerkknoten übergeben. Andernfalls werden die Datenpakete durch die Übertragungskomponente 115 aus dem Drahtlosprotokoll in ein weiteres Protokoll, das zur Kommunikation zwischen Netzwerkknoten verwendet wird, übersetzt. Anschließend leitet die Übertragungskomponente oder auch eine alternative Komponente des Netzwerkknotens 110 die Datenpakete an den Zielknoten weiter, beispielsweise durch Weitergabe an einen weiteren Netzwerkknoten auf einer Route zu dem Zielknoten. Insbesondere können die Datenpakete auch an mehrere oder sämtliche Netzwerkknoten geleitet werden, wenn sie entsprechend adressiert sind.

In weiteren Ausführungsformen versendet einer der Netzwerkknoten 110 Datenpakete an ein Mobilgerät 120. Verfügt dieser Netzwerkknoten über eine Übertragungskomponente, so wird geprüft, ob diese mit dem betreffenden Mobilgerät 120 verbunden ist. Diese Prüfung kann beispielsweise über einen eindeutigen Bezeichner, der dem Mobilgerät zugeordnet ist, erfolgen. Sind beide Bedingungen erfüllt, werden die Datenpakete in das Drahtlosprotokoll übersetzt und ausgeliefert.

Ist eine der Bedingungen nicht erfüllt, wird eine Route in dem Netzwerk zu dem Mobilgerät ermittelt. Hierzu können konventionelle Routingmechanismen verwendet werden, beispielsweise unter Verwendung einer lokalen Netzwerkadresse des Mobilgeräts 120. Zusätzlich kann geprüft werden, unter welchen Netzwerkadressen ein Mobilgerät 120 mit einem bestimmten Bezeichner erreichbar ist, und mit welchem Netzwerkknoten beziehungsweise welcher Übertragungskomponente das Mobilgerät verbunden ist. Hierzu kann im Netzwerk eine Tabelle vorgesehen sein, in der Bezeichner, Netzwerkadressen und Übertragungskomponenten oder Netzwerkknoten aufeinander abgebildet werden. Jeder dieser Parameter kann durch Nachschlagen eines der anderen Parameter eingeholt werden.

Die Datenpakete werden an diejenige Übertragungskomponente 115 übermittelt, die mit dem Mobilgerät 120 verbunden ist. Dort erfolgt eine Übersetzung der Datenpakete aus dem zuletzt verwendeten Protokoll des Netzwerkes in das Drahtlosprotokoll sowie Übermitteln der Datenpakete an das Mobilgerät.

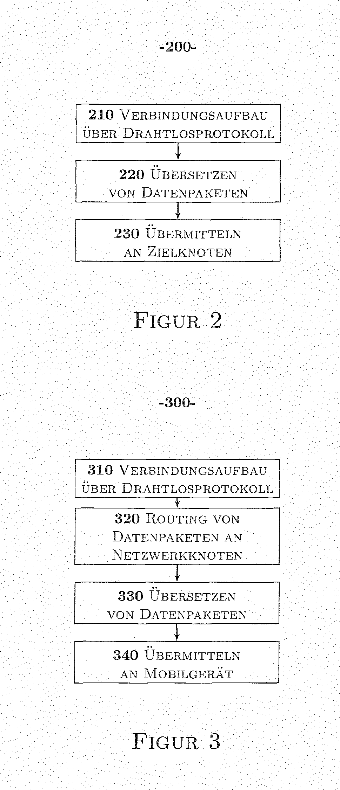

Figur 2 zeigt ein erfindungsgemäßes Verfahren 200 zum Aufbau von Verbindungen und Übermitteln von Datenpaketen zwischen einem Netzwerkknoten in einem Netzwerk und einem Mobilgerät.

In Schritt 210 verbindet sich das Mobilgerät, wie bereits erläutert, mit einem Netzwerkknoten, beispielsweise mit einem Netzwerkknoten, der sowohl eine Empfangsqualität über einem vorbestimmten Schwellwert als auch eine beste Empfangsqualität gegenüber anderen Netzwerkknoten bietet.

in Schritt 220 wird durch eine Übertragungskomponente in dem Netzwerkknoten eine Übersetzung empfangener Datenpakete vorgenommen. Hierzu werden Datenpakete aus einem Drahtlosprotokoll, das zwischen dem Netzwerkknoten und dem Mobilgerät verwendet wird, in ein weiteres Protokoll, das zwischen Netzwerkknoten verwendet wird, übersetzt.

In Schritt 230 übermittelt die Übertragungskomponente die übersetzten Datenpakete an einen oder mehrere Zielknoten entsprechend einer Adressierung der Datenpakete.

Figur 3 zeigt ein erfindungsgemäßes Verfahren zum Übermitteln von Datenpaketen von einem Netzwerkknoten in einem Netzwerk zu einem Mobilgerät.

In Schritt 310 erfolgt ein drahtloser Verbindungsaufbau zwischen einem Netzwerkknoten und einem Mobilgerät. Dieser Verbindungsaufbau kann unabhängig davon erfolgen, dass der Netzwerkknoten oder ein anderer Netzwerkknoten Datenpakete an das Mobilgerät sendet. Insbesondere kann das Mobilgerät fortwährend drahtlose Verbindungen zu Netzwerkknoten aufbauen und andere drahtlose Verbindungen wieder abbrechen.

In Schritt 320 werden Datenpakete von einem Netzwerkknoten zu demjenigen Netzwerkknoten übermittelt, der mit dem Mobilgerät verbunden ist. Dieser Netzwerkknoten kann beispielsweise anhand eines Bezeichners des Mobilgeräts ermittelt werden, der diesem zugeordnet ist. Hierzu können etwa die bereits beschriebenen Tabellen verwendet werden.

In Schritt 330 übersetzt eine Übertragungskomponente in demjenigen Netzwerkknoten, mit dem das Mobilgerät verbunden ist, die Datenpakete aus einem Protokoll, das zwischen den Netzwerkknoten verwendet wird, in ein Drahtlosprotokoll, das zwischen Netzwerkknoten und Mobilgerät verwendet wird.

In Schritt 340 werden die übersetzten Datenpakete an das Mobilgerät übermittelt.

Die Erfindung ermöglicht auf vorteilhafte Weise eine Verbindung zwischen Mobilgerät und Netzwerk, wobei der jeweilige Zugangspunkt zum Netzwerk flexibel bestimmt wird und ein vorbestimmter Zugangspunkt, etwa ein festes Gateway, nicht mehr notwendig ist. Darüber hinaus wird als Zugangspunkt ein Netzwerkknoten mit der jeweils besten möglichen Empfangsqualität ausgesucht. Der Zugangspunkt kann fortlaufend gewechselt werden, wobei die Verbindungswechsel für den Benutzer in der Regel nicht wahrnehmbar sind, während sich der Benutzer mit dem Mobilgerät durch das Gebäude bewegt. Die Flexibilität der Erfindung wird ferner gesteigert durch ein automatisches Übersetzen von Datenpaketen in ein jeweiliges Zielprotokoll und Übermitteln der übersetzten Datenpakete an Zielknoten oder Mobilgerät, so dass selbst bei Vorliegen unterschiedlicher Protokolle auf dem Weg zum Mobilgerät zu Zielknoten flexible Verbindungswechsel ermöglicht werden.

## Patentansprüche

1. System (100), umfassend:
einen oder mehrere Netzwerkknoten (110), die über ein erstes Netzwerkprotokoll miteinander kommunizieren, wobei wenigstens ein Netzwerkknoten (110) eingerichtet ist, mit einem mobilen Endgerät (120) eine Drahtlosverbindung über ein zweites Netzwerkprotokoll aufzubauen, wobei der Netzwerkknoten (110) eine Übertragungskomponente (115) aufweist, die eingerichtet ist, eine Verbindung zwischen dem mobilen Endgerät (120) und einem Zielknoten (110) der Netzwerkknoten (110) aufzubauen, wobei das zweite Netzwerkprotokoll von der Übertragungskomponente (115) in das erste Netzwerkprotokoll übersetzt wird,
und wobei das mobile Endgerät (120) eingerichtet ist, unter den mittels Funk erreichbaren Netzwerkknoten (110) denjenigen mit der besten Verbindungsqualität zu dem mobilen Endgerät (120) auszuwählen, **dadurch gekennzeichnet, dass** der Zielknoten (110) anhand einer Benutzereingabe in das mobile Endgerät (120) bestimmt wird.

2. System (100) nach Anspruch 1, wobei die Verbindung eine Punkt-zu-Punkt-Verbindung zwischen dem mobilen Endgerät (120) und dem Zielknoten (110) ist.

3. System (100) nach Anspruch 1, wobei das mobile Endgerät (120) mit mehreren der Netzwerkknoten (110) gleichzeitig verbunden ist.

4. System (100) nach einem der Ansprüche i bis 3, wobei das erste Netzwerkprotokoll das KNX-Protokoll ist und/oder wobei das zweite Netzwerkprotokoll das Bluetooth-Protokoll ist.

5. System (100) nach einem der Ansprüche i bis 54 wobei der Verbindungsaufbau von dem mobilen Endgerät (120) zu dem Zielknoten durch das Mobilgerät (120) initiiert wird.

6. System (100) nach einem der Ansprüche 1 bis 5, wobei Daten, die von dem mobilen Endgerät (120) an dem Netzwerkknoten (110) empfangen werden, durch die Übertragungskomponente (115) ein Servicecode hinzugefügt wird, der Eigenschaften der Daten anzeigt, insbesondere Angaben darüber, ob die Daten an einen Netzwerkknoten (110) oder ein mobiles Endgerät (120) ausgeliefert werden sollen.

7. System (100) nach Anspruch 6, wobei die Verbindung zwischen dem mobilen Endgerät (120) und dem Zielknoten (110) über mehrere Netzwerkknoten (110) verlauft und jeder dieser Netzwerkknoten (110) den übertragenen Daten einen Servicecode hinzugefügt oder einen vorhandenen Servicecode modifiziert.

8. System (100), umfassend:
einen oder mehrere Netzwerkknoten (110), die über ein erstes Netzwerkprotokoll miteinander kommunizieren, wobei wenigstens ein Netzwerkknoten (110) eingerichtet ist, mit einem mobilen Endgerät (120) eine Drahtlosverbindung über ein zweites Netzwerkprotokoll aufzubauen, wobei der Netzwerkknoten (110) eine Übertragungskomponente (115) aufweist, die eingerichtet ist, eine Verbindung zwischen einem Zielknoten der Netzwerkknoten (110) und dem mobilen Endgerät (120) aufzubauen, wobei das erste Netzwerkprotokoll von der Übertragungskomponente (115) in das zweite Netzwerkprotokoll übersetzt wird, und wobei das mobile Endgerät (120) eingerichtet ist, unter den mittels Funk erreichbaren Netzwerkknoten (110) denjenigen mit der besten Verbindungsqualität zu dem mobilen Endgerät (120) auszuwählen, **dadurch gekennzeichnet, dass**
der ausgewählte Netzwerkknoten eingerichtet ist. den Zielknoten (110) anhand einer Benutzereingabe in das mobile Endgerät (120) zu bestimmen.

9. System (100) nach Anspruch 8, wobei der Verbindungsaufbau zu dem mobilen Endgerät (120) durch den Netzwerkknoten (110) oder einen zweiten Netzwerkknoten initiiert wird.

10. System (100) nach Anspruch 9, wobei Daten, die von dem Netzwerkknoten (110) an das mobile Endgerät (120) gesendet werden, durch die Übertragungskomponente (115) ein Servicecode hinzugefügt wird, der Eigenschaften der Daten anzeigt, insbesondere Angaben darüber, ob die Daten an einen Netzwerkknoten (110) oder ein mobiles Endgerät (120) ausgeliefert werden sollen.

11. System (100) nach Anspruch 10, wobei die Verbindung zwischen dem Netzwerkknoten (120) und dem mobile Endgerät (120) über mehrere Netzwerkknoten (110) verläuft und jeder dieser Netzwerkknoten (110) den übertragenen Daten einen Servicecode hinzufügt oder einen vorhandenen Servicecode modifiziert.

12. Verfahren umfassend:
Aufbauen einer Verbindung zwischen einem mobilen Endgerät (120) und einem von mehreren Netzwerkknoten (110), die über ein erstes Protokoll miteinander kommunizieren, über ein zweites Protokoll, wobei das mobile Endgerät (120) unter den mittels Funk erreichbaren Netzwerkknoten denjenigen mit der besten Verbindungsqualität auswählt;
Übersetzen von Daten, die an dem Netzwerkknoten (110) von dem mobilen Endgerät (120) empfangen werden, aus dem zweiten Protokoll in das erste Protokoll; und
Weiterleiten der Daten an einen in den Daten angegebenen Zielknoten (110) in dem Netzwerk; **dadurch gekennzeichnet, dass**
der Zielknoten (110) anhand einer Benutzereingabe in das mobile Endgerät (120) bestimmt wird.

13. Verfahren umfassend:
Aufbauen einer Verbindung zwischen einem mobilen Endgerät (120) und einem Zielknoten von mehreren Netzwerkknoten (110), die über ein erstes Protokoll miteinander kommunizieren, über ein zweites Protokoll, wobei das mobile Endgerät (120) unter den mittels Funk erreichbaren Netzwerkknoten denjenigen mit der besten Verbindungsqualität auswählt;
Übersetzen von Daten, die an dem Netzwerkknoten (110) von einem anderenNetzwerkknoten (110) über das erste Netzwerkprotokoll empfangen werden, aus dem ersten Protokoll in das zweite Protokoll; und
Weiterleiten der Daten an das mobile Endgerät (120); **dadurch gekennzeichnet, dass** der Zielknoten (110) anhand einer Benutzereingabe in das mobile Endgerät (120) bestimmt wird.

## Claims

1. A system (100), comprising:
one or more network nodes (110) which communicate with each other via a first network protocol, wherein at least one network node (110) is configured to establish a wireless connection with a mobile end device (120) via a second network protocol, wherein the network node (110) comprises a transmission component (115) which is configured to establish a connection between the mobile end device (120) and a target node (110) of the network nodes (110), wherein the second network protocol is translated by the transmission component (115) into the first network protocol,
and wherein the mobile end device (120) is configured to select the network node (110) among those accessible wirelessly which has the best connection quality to the mobile end device (120), **characterized in that** the target node (110) is determined on the basis of a user input into the mobile end device (120).

2. The system (100) according to claim 1, in which the connection is a point-to-point connection between the mobile end device (120) and the target node (110).

3. The system (100) according to claim 1, in which the mobile end device (120) is simultaneously connected to several of the network nodes (110).

4. The system (100) according to any of claims 1 to 3, in which the first network protocol is the KNX protocol and/or wherein the second network protocol is the Bluetooth protocol.

5. The system (100) according to any of claims 1 to 4, in which the establishing of a connection from the mobile end device (120) to the target node is initiated by the mobile end device (120).

6. The system (100) according to any of the preceding claims 1 to 5, in which a service code is added by the transmission component (115) to data received from the mobile end device (120) on the network node (110), which service code indicates properties of the data, in particular information on whether the data is to be sent to a network node (110) or a mobile end terminal (120).

7. The system (100) according to claim 6, in which the connection between the mobile end device (120) and the target node (110) passes through several network nodes (110) and each of these network nodes (110) adds a service code to the transmitted data or modifies an existing service code.

8. A system (100), comprising:
one or more network nodes (110) which communicate with each other via a first network protocol, wherein at least one network node (110) is configured to establish a wireless connection with a mobile end device (120) via a second network protocol, wherein the network node (110) comprises a transmission component (115) which is configured to establish a connection between a target node of the network nodes (110) and the mobile end device (120), wherein the first network protocol is translated by the transmission component (115) into the second network protocol, and wherein the mobile end device (120) is configured to select the network node (110) among those accessible wirelessly which has the best connection quality to the mobile end device (120),
**characterized in that**
the selected network node is configured to determine the target node (110) on the basis of a user input into the mobile end device (120).

9. The system (100) according to claim 8, in which the establishing of a connection to the mobile end device (120) is initiated by the network node (110) or by a second network node.

10. The system (100) according to claim 9, in which a service code is added by the transmission component (115) to data sent from the network node (110) to the mobile end device (120), which service code indicates properties of the data, in particular information on whether the data is to be sent to a network node (110) or a mobile end terminal (120).

11. The system (100) according to claim 10, in which the connection between the network node (120) and the mobile end device (120) passes through several network nodes (110) and each of these network nodes (110) adds a service code to the transmitted data or modifies an existing service code.

12. A method, comprising:
establishing, via a second protocol, a connection between a mobile end device (120) and one of several network nodes (110) which communicate with each other via a first protocol, wherein the mobile end device (120) selects the network node among those accessible wirelessly which has the best connection quality;
translating data which is received on the network node (110) from the mobile device (120) from the second protocol into the first protocol; and
the data to a target node (110) in the network, the target node being indicated in the data; **characterized in that**
the target node (110) is determined on the basis of a user input into the mobile end device (120).

13. A method, comprising:
establishing, via a second protocol, a connection between a mobile end device (120) and a target node of several network nodes (110) which communicate with each other via a first protocol, wherein the mobile end device (120) selects the network node among those accessible wirelessly which has the best connection quality;
translating data which is received on the network node (110) from an other network node (110) via the first network protocol from the second protocol into the first protocol; and
transmitting the data to the mobile end device (120); **characterized in that** the target node (110) is determined on the basis of a user input into the mobile end device (120).

## Revendications

1. Système (100) comprenant :
un ou plusieurs nœuds de réseau (110), qui communiquent entre eux par l'intermédiaire d'un premier protocole de réseau, au moins un nœud de réseau (110) étant configuré pour établir, avec un terminal mobile (120), une liaison sans fil par l'intermédiaire d'un deuxième protocole de réseau, le nœud de réseau (110) comprenant un composant de transmission (115) qui est configuré pour établir une liaison entre le terminal mobile (120) et un nœud cible (110) des nœuds de réseau (110), le deuxième protocole de réseau étant traduit dans le premier protocole de réseau par le composant de transmission (115)
et le terminal mobile (120) étant configuré pour sélectionner, par mi les nœuds de réseau (110) joignables par radio, ceux qui ont la meilleure qualité de liaison avec le terminal mobile (120), **caractérisé en ce que** le nœud cible (110) est déterminé à l'aide d'une entrée d'utilisateur dans le terminal mobile (120).

2. Système (100) selon la revendication 1, la liaison étant une liaison point-à-point entre le terminal mobile (120) et le nœud cible (110).

3. Système (100) selon la revendication 1, le terminal mobile (120) étant relié simultanément avec plusieurs des nœuds du réseau (110).

4. Système (100) selon l'une des revendications 1 à 3, le premier protocole de réseau étant le protocole KNX et/ou le deuxième protocole de réseau étant le protocole Bluetooth.

5. Système (100) selon l'une des revendications 1 à 4, l'établissement de la liaison entre le terminal mobile (120) et le nœud cible étant initié par le terminal mobile (120).

6. Système (100) selon l'une des revendications 1 à 5, moyennant quoi, aux données qui sont reçues en provenance du terminal mobile (120) au niveau du nœud de réseau (110), est ajouté, par le composant de transmission (115), un code de service qui affiche les propriétés des données, plus particulièrement des informations sur le fait que les données doivent être délivrées à un nœud de réseau (110) ou à un terminal mobile (120).

7. Système (100) selon la revendication 6, la liaison entre le terminal mobile (120) et le nœud cible (110) s'étendant sur plusieurs nœuds de réseau (110) et chacun de ces nœuds de réseau (110) ajoutant aux données transmises un code de service ou modifiant un code de service existant.

8. Système (100) comprenant :
un ou plusieurs nœuds de réseau (110), qui communiquent entre eux par l'intermédiaire d'un premier protocole de réseau, au moins un nœud de réseau (110) étant configuré pour établir, avec un terminal mobile (120), une liaison sans fil par l'intermédiaire d'un deuxième protocole de réseau, le nœud de réseau (110) comprenant un composant de transmission (115) qui est configuré pour établir une liaison entre un nœud cible des nœuds de réseau (110) et le terminal mobile (120), le premier protocole de seau étant traduit dans le deuxième protocole de réseau par le composant de transmission (115) et le terminal mobile (120) étant configuré pour sélectionner, parmi les nœuds de réseau (110) joignables par radio, ceux qui ont la meilleure qualité de liaison avec le terminal mobile (120), **caractérisé en ce que**
le nœud de réseau sélectionné est configuré pour déterminer le nœud cible (110) à l'aide d'une entrée d'utilisateur dans le terminal mobile (120).

9. Système (100) selon la revendication 8, l'établissement de la liaison avec le terminal mobile (120) est initié par le nœud de réseau (110) ou un deuxième nœud de réseau.

10. Système (100) selon la revendication 9, moyennant quoi, aux données qui sont envoyées par le nœud de réseau (110) au terminal mobile (120), est ajouté, par le composant de transmission (115), un code de service qui affiche des propriétés des données, plus particulièrement des informations sur le fait que les données doivent être délivrées à un nœud de réseau (110) ou à un terminal mobile (120).

11. Système (100) selon la revendication 10, la liaison entre le nœud de réseau (120) et le terminal mobile (120) s'étendant sur plusieurs nœuds de réseau (110) et chacun de des nœuds de réseau (110) ajoutant aux données transmises un code de service ou modifiant un code de service existant.

12. Procédé comprenant :
l'établissement d'une liaison entre un terminal mobile (120) et un parmi plusieurs nœuds de réseau (110), qui communiquent entre eux par l'intermédiaire d'un premier protocole de réseau, par l'intermédiaire d'un deuxième protocole, le terminal mobile (120) sélectionnant, parmi les nœuds de réseau joignables par radio, ceux avec la meilleure qualité de liaison ;
la conversion des données qui sont reçues au niveau du nœud de réseau (110) en provenance du terminal mobile (120), du deuxième protocole au premier protocole ; et
la transmission des données à un nœud cible (110) du réseau indiqué dans les données ; **caractérisé en ce que** le nœud cible (110) est déterminé à l'aide d'une entrée d'utilisateur dans le terminal mobile (120).

13. Procédé comprenant :
l'établissement d'une liaison entre un terminal mobile (120) et un nœud de réseau parmi plusieurs nœuds de réseau (110), qui communiquent entre eux par l'intermédiaire d'un premier protocole de réseau, par l'intermédiaire d'un deuxième protocole, le terminal mobile (120) sélectionnant, parmi les nœuds de réseau joignables par radio, ceux avec la meilleure qualité de liaison ;
la conversion des données qui sont reçues au niveau du nœud de réseau (110) en provenance d'un autre nœud de réseau (110) par l'intermédiaire du premier protocole de réseau, du premier protocole au deuxième protocole ; et
la transmission des données au terminal mobile (120) ; **caractérisé en ce que** le nœud cible (110) est déterminé à l'aide d'une entrée d'utilisateur dans le terminal mobile (120).
